# EUROPEAN PATENT SPECIFICATION

(11) **EP 4 226 062 B1**
(45) Date of publication and mention of the grant of the patent: **06.11.2024**
(21) Application number: 21787003.9
(22) Date of filing: 06.09.2021
(51) Int. Cl.: F16D 3/84, F16D 3/72, F04D 29/054, F16P 1/02, F04D 29/08, F04D 29/58, H02K 7/14, H02K 9/02

(54) **YIELDING COUPLING WITH A COVER AND AN ELECTROMECHANICAL SYSTEM COMPRISING SUCH A COUPLING**
BEWEGLICHE KUPPLUNG MIT EINER ABDECKUNG UND EINE ELEKTROMECHANISCHER ANORDNUNG MIT EINER SOLCHEN KUPPLUNG
ACCOUPLEMENT EXTENSIBLE AVEC UN COUVERCLE ET UNE DISPOSITION ÉLECTROMÉCANIQUE AVEC UN TEL ACCOUPLEMENT

(30) Priority: 05.10.2020 FI 20205970
(43) Date of publication of application: 16.08.2023
(73) Proprietor: Lappeenrannan-Lahden teknillinen yliopisto LUT, 53851 Lappeenranta (FI)
(72) Inventor: PYRHÖNEN, Juha, 53851 LAPPEENRANTA (FI); PYRHÖNEN, Olli, 53851 LAPPEENRANTA (FI); SOPANEN, Jussi, 53851 LAPPEENRANTA (FI); LAUKKANEN, Jorma, 53851 LAPPEENRANTA (FI); AARNIOVUORI, Lassi, 53851 LAPPEENRANTA (FI)
(74) Representative: Väänänen, Janne Kalervo
(86) International application number: PCT/FI2021/050595
(87) International publication number: WO 2022/074285

(56) References cited:
- EP-A1- 3 121 449
- WO-A2-2008/039732
- CN-A- 107 956 812
- CN-A- 109 236 879
- CN-U- 201 461 769
- DE-U1- 9 317 524
- JP-A- 2006 002 569
- JP-A- 2013 241 889

## Description

### Field of the invention

The invention relates to a joint element for mechanically connecting an electric machine to a rotating apparatus, e.g. a turbo-compressor. Furthermore, the invention relates to an electromechanical system comprising the joint element.

### Background

In many electromechanical systems, there is a need for a hermetic encapsulation of an electric machine and a rotating apparatus, e.g. a turbo-compressor, connected to the electric machine. In a typical mechanical arrangement, a shaft of the electric machine is connected to a shaft of the rotating apparatus and a bushing of the shaft of the electric machine is sealed with respect to a casing of the electric machine and correspondingly a bushing of the shaft of the rotating apparatus is sealed with respect to a casing of the rotating apparatus. In many cases, there can be however challenges in sealing a rotating shaft with respect to a stationary casing.

In another mechanical arrangement, the electric machine and the rotating apparatus constitute an integrated device which is encapsulated with a common hermetic casing. For example, publication WO2020108990 describes an electrical turbo compressor suitable for supplying air to a fuel cell. The turbo compressor comprises a housing, a shaft which has a first end and a second end and is rotatably mounted relative to the housing, an electric machine arranged in the housing, and a turbo-compressor impeller and diffuser arranged in the housing, wherein the shaft can be driven by means of the electric machine. An inherent drawback of a mechanical arrangement of the kind mentioned above is that the integrated device comprising the electric machine and the rotating apparatus is a single entity which must typically be obtained from a single vendor and thereby the electric machine and the rotating apparatus must be obtained from the same vendor. Thus, it is challenging to achieve a same level of cost effectiveness than in a case in which the vendors of the electric machine and the rotating apparatus can be selected freely.

Publication WO2008039732 describes a connector system for connecting a first component and a second component of an industrial compression system. The connector system comprises a connector spool having a substantially cylindrical shape. The spool comprises an axial end and a flange at the axial end, the flange defining a radial surface for positioning proximate the first component. A spacer is positioned between the flange of the spool and the first component, the spacer including radial surfaces for providing uniform compressive force transmission between the spool and the first component.

Publication CN107956812 describes a refrigeration compressor coupling protective cover. The refrigeration compressor coupling protective cover comprises a first sealing O-ring, a refrigeration compressor, a metal expansion joint, a protective cover upper cover, a protective cover lower cover, an acceleration gear box, a second sealing O-ring, dowel pins, and a third sealing O-ring. The first sealing O-ring is arranged between the metal expansion joint and the refrigeration compressor, the protective cover upper cover is arranged at the upper end of the protective cover lower cover, the third sealing O-ring is arranged between the metal expansion joint and the protective cover upper cover as well as the protective cover lower cover, the second sealing O-ring is arranged between the protective cover upper cover as well as the protective cover lower cover and the acceleration gear box, and the dowel pins are arranged in pin holes at the upper ends of extension circles of the front and back edge sides of the protective cover upper cover and the protective cover lower cover.

Publication EP3121449 describes a centrifugal compressor unit that comprises a motor having a rotor, at least one compressor having a shaft driven by the rotor, and a set of bladed wheels fitted on the driven shaft. The motor and the compressor are mounted in a common watertight casing. The centrifugal compressor unit further comprises cooling means for cooling the motor. The cooling means have a gas cooler outside the casing. In operation, the motor, the compressor, and the casing having the motor and the compressor are arranged horizontally. Only one axial thrust bearing is provided on a compressor side.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the present invention, there is provided a new electromechanical system that comprises:
- an electric machine,
- a rotating apparatus being a turbo-compressor, and
- a joint element configured to mechanically connect the electric machine to the rotating apparatus.

The joint element comprises:
- a coupling element connecting a shaft of the electric machine to a shaft of the rotating apparatus in a torque transferring way, and
- a tubular portion surrounding the coupling element,
wherein:
- a first rim of the tubular portion comprises a seal for arranging a first hermetic joint between the first rim of the tubular portion and an outer surface of the electric machine,
- a second rim of the tubular portion comprises a seal for arranging a second hermetic joint between the second rim of the tubular portion and an outer surface of the rotating apparatus, and
- the tubular portion comprises an opening and a lid for hermetically closing the opening, the opening providing access to the coupling element from outside the tubular portion.

As the first and second hermetic joints are formed between the tubular portion, the electric machine, and the rotating apparatus, the electric machine, the joint element, and the rotating apparatus can be arranged to constitute a hermetically sealed entity, even if the electric machine and the rotating apparatus may be obtained as separate devices from different vendors.

Various exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying embodiments when read in conjunction with the accompanying drawings.

The verbs "to comprise" and "to include" are used in this document as open limitations that neither exclude nor require the existence of also un-recited features.

The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1 illustrates an electromechanical system according to an exemplifying and non-limiting embodiment, and
figure 2 illustrates an electromechanical system according to an exemplifying and non-limiting embodiment.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

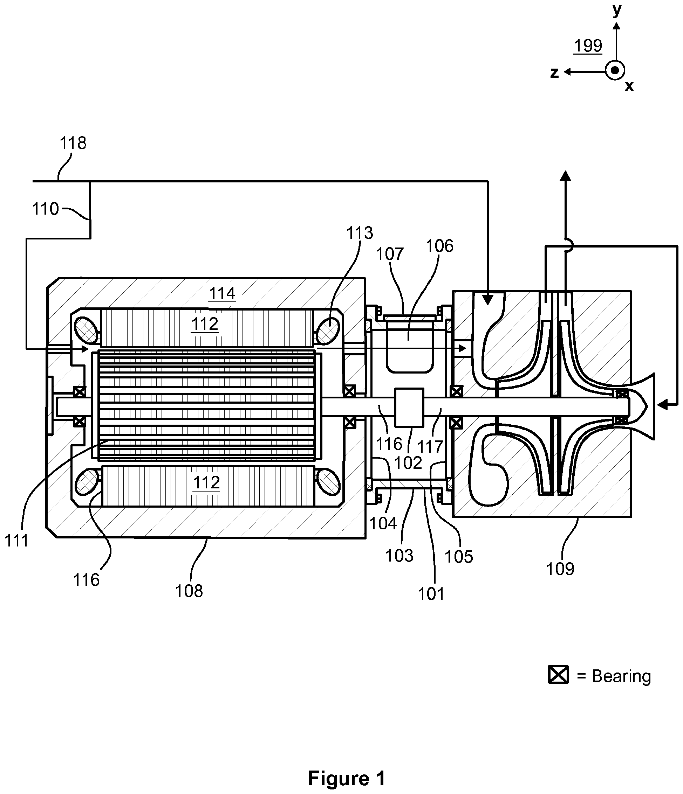

Figure 1 shows a section view of an electromechanical system according to an exemplifying and non-limiting embodiment. The section is taken along a geometric section plane which is parallel with the yz-plane of a coordinate system 199. The electromechanical system comprises an electric machine 108, a rotating apparatus 109, and a joint element 101 according to an exemplifying and non-limiting embodiment. The joint element 101 is configured to mechanically connect the electric machine 108 to the rotating apparatus 109. In the exemplifying electromechanical system illustrated in figure 1, the rotating apparatus 109 is a two-stage turbo-compressor where a first compressor stage and a second compressor stage are connected in series, and the electric machine 108 is an inner rotor induction machine whose rotor 111 comprises a cage winding. In this exemplifying case, the rotor 111 comprises a rotor core structure made of electrically insulated ferromagnetic sheets stacked in the axial direction of the electric machine 108, i.e. in the z-direction of the coordinate system 199. A stator 116 of the electric machine 108 comprises a stator core structure 112 constituted by a stack of electrically insulated ferromagnetic sheets stacked on each other in the axial direction of the electric machine. The stator 116 comprises stator windings whose coil sides are located in stator slots between stator teeth of the stator core structure 112. The stator windings can be configured to constitute a multiphase winding for producing a rotating magnetic field when supplied with multiphase alternating electric currents. The multiphase winding can be e.g. a three-phase winding. In figure 1, a section view of an end-winding of the stator windings is denoted with a reference 113. The coil sides of the stator windings are not shown. The stator slots can be parallel with the axial direction of the electric machine 108. It is however also possible that the stator 116 has skewed stator slots. It is to be noted that the above-described induction machine is an example only, and the electric machine can as well be another kind of electric machine such as e.g. an electrically magnetized synchronous machine, a permanent magnet synchronous machine, a synchronous reluctance machine, a switched reluctance machine, or a direct current machine.

In the exemplifying electromechanical system illustrated in figure 1, the rotor 111 of the electric machine 108 is cooled so that the electromechanical system comprises a piping 110 configured to guide a part of an input flow of the turbo-compressor to flow through an airgap of the electric machine 108. In figure 1, the total input flow of the turbo-compressor is denoted with a reference 118. The stator 116 of the electric machine 108 can be cooled for example with a water jacket in a stator frame 114. The water jacket is not shown in figure 1. It is also possible that the stator windings comprise hollow, tubular conductors and liquid or gaseous cooling fluid is circulated via the hollow conductors.

The joint element 101 comprises a coupling element 102 for connecting a shaft 116 of the electric machine 108 to a shaft 117 of the rotating apparatus 109 in a torque transferring way. The coupling element 102 can be e.g. a suitable coupling element according to the prior art. The coupling element 102 can be e.g. cambered to allow certain misalignment between the rotational axes of the shaft 116 of the electric machine 108 and the shaft 117 of the rotating apparatus 109. Thus, the coupling element 102 can be arranged to remove the additional loading which would be otherwise caused by the possible misalignment to the bearings of the electric machine 108 and to the bearings of rotating apparatus 109.

The joint element 101 comprises a tubular portion 103 that surrounds the coupling element 102. A first rim of the tubular portion comprises a seal 104 for arranging a first hermetic joint between the first rim of the tubular portion 103 and an outer surface of the electric machine 108. Correspondingly, a second rim of the tubular portion 103 comprises a seal 105 for arranging a second hermetic joint between the second rim of the tubular portion and an outer surface of the rotating apparatus 109.

The tubular portion 103 comprises an opening 106 and a lid 107 for hermetically closing the opening. The opening 106 provides access to the coupling element 102 from outside the tubular portion 103, e.g. to allow installation of the coupling element 102. As the above-mentioned first and second hermetic joints are formed between the tubular portion 103, the electric machine 108, and the rotating apparatus 109, the electric machine, the joint element, and the rotating apparatus constitute a hermetically sealed entity.

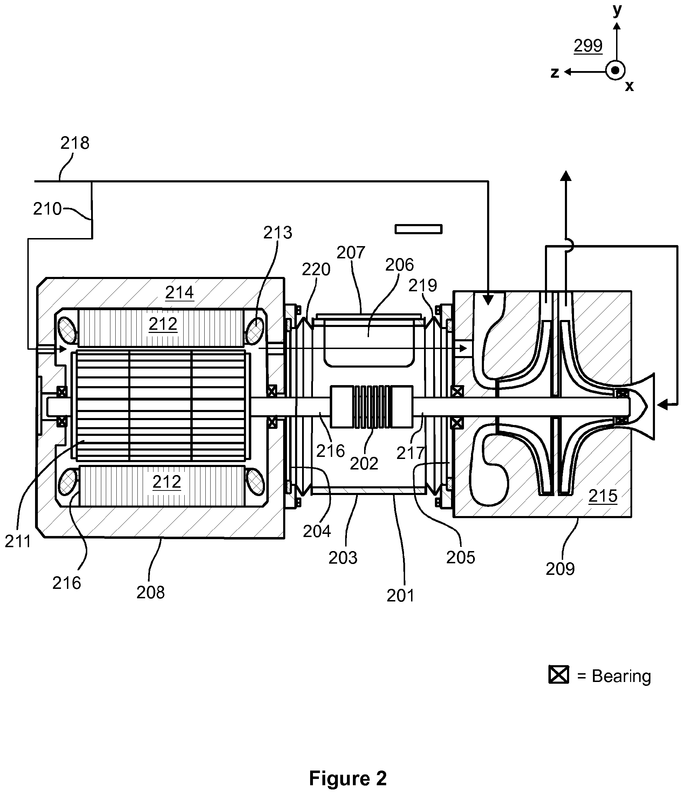

Figure 2 shows a section view of an electromechanical system according to an exemplifying and non-limiting embodiment. The section is taken along a geometric section plane which is parallel with the yz-plane of a coordinate system 299. The electromechanical system comprises an electric machine 208, a rotating apparatus 209, and a joint element 201 according to an exemplifying and non-limiting embodiment. The joint element 201 is configured to mechanically connect the electric machine 208 to the rotating apparatus 209. In the exemplifying electromechanical system illustrated in figure 2, the rotating apparatus 209 is a two-stage turbo-compressor where a first compressor stage and a second compressor stage are connected in series, and the electric machine 208 is an inner rotor permanent magnet machine whose rotor 211 comprises permanent magnets. The rotor 211 comprises a rotor core structure that can be made of for example electrically insulated ferromagnetic sheets stacked in the axial direction of the electric machine 208, i.e. in the z-direction of the coordinate system 299. As another exemplifying alternative, the rotor core structure may comprise ferrite or iron powder composites such as e.g. Soft Magnetic Composite SOMALOY^{®}. In this exemplifying electromechanical system, the electric machine 208 comprises surface mounted permanent magnets attached on a surface of the rotor core structure. It is also possible that a rotor has buried permanent magnets located in cavities of a rotor core structure.

A stator 216 of the electric machine 208 comprises a stator core structure 212 constituted by a stack of electrically insulated ferromagnetic sheets stacked on each other in the axial direction of the electric machine. The stator 216 comprises stator windings whose coil sides are located in stator slots between stator teeth of the stator core structure 212. The stator windings can be configured to constitute a multiphase winding for producing a rotating magnetic field when supplied with multiphase alternating electric currents. The multiphase winding can be e.g. a three-phase winding. In figure 2, a section view of an end-winding of the stator windings is denoted with a reference 213. The coil sides of the stator windings are not shown. The stator slots can be parallel with the axial direction of the electric machine 208. It is however also possible that the stator 216 has skewed stator slots.

The joint element 201 comprises a coupling element 202 for connecting a shaft 216 of the electric machine 208 to a shaft 217 of the rotating apparatus 209 in a torque transferring way. In this exemplifying case, the coupling element 202 is a flexible coupling element to inhibit conduction of vibrations between the shafts 216 and 217 of the electric machine 208 and the rotating apparatus 209. The flexible coupling element 202 can be for example a bellow coupling or some other suitable flexible coupling element.

The joint element 201 comprises a tubular portion 203 that surrounds the coupling element 202. A first rim of the tubular portion comprises a seal 204 for arranging a first hermetic joint between the first rim of the tubular portion 203 and an outer surface of the electric machine 208. Correspondingly, a second rim of the tubular portion 203 comprises a seal 205 for arranging a second hermetic joint between the second rim of the tubular portion and an outer surface of the rotating apparatus 209. The tubular portion 203 comprises an opening 206 and a lid 207 for hermetically closing the opening. The opening provides access to the coupling element 202 from outside the tubular portion 203, e.g. to allow installation of the coupling element 202.

In the exemplifying electromechanical system illustrated in figure 2, the tubular portion is provided with ring-shaped flexible elements 219 and 220 to inhibit conduction of vibrations between a stator frame 214 of the electric machine 208 and a frame 215 of the rotating apparatus 209. In this exemplifying case, each of the ring-shaped flexible elements 219 and 220 is a ring-shaped metal bellow.

In the exemplifying electromechanical system illustrated in figure 2, the rotor of the electric machine 208 is cooled so that the electromechanical system comprises a piping 210 configured to guide a part of an input flow of the turbo-compressor to flow through an airgap of the electric machine 208. In figure 2, the total input flow of the turbo-compressor is denoted with a reference 218. The stator 216 of the electric machine 208 can be cooled for example with a water jacket in the stator frame 214. The water jacket is not shown in figure 2. It is also possible that the stator windings comprise hollow, tubular conductors and cooling fluid is circulated via the hollow conductors.

The specific examples provided in the description given above should not be construed as limiting the scope and/or the applicability of the accompanied claims. Lists and groups of examples provided in the description given above are not exhaustive unless otherwise explicitly stated.

## Claims

1. An electromechanical system comprising:
- an electric machine (108, 208),
- a rotating apparatus (109, 209) being a turbo-compressor, and
- a joint element (101, 201) configured to mechanically connect the electric machine to the rotating apparatus,
wherein the joint element comprises:
- a coupling element (102, 202) connecting a shaft of the electric machine to a shaft of the rotating apparatus in a torque transferring way, and
- a tubular portion (103, 203) surrounding the coupling element,
wherein:
- a first rim of the tubular portion comprises a seal (104, 204) for arranging a first hermetic joint between the first rim of the tubular portion and an outer surface of the electric machine,
- a second rim of the tubular portion comprises a seal (105, 205) for arranging a second hermetic joint between the second rim of the tubular portion and an outer surface of the rotating apparatus, and
- the tubular portion comprises an opening (106, 206) and a lid (107, 207) for hermetically closing the opening, the opening providing access to the coupling element from outside the tubular portion.
**characterized in that** the electromechanical system comprises a piping (110, 210) configured to guide a part of an input flow of the turbo-compressor to flow through an airgap of the electric machine.

2. An electromechanical system according to claim 1, wherein the tubular portion is provided with at least one ring-shaped flexible element (219, 220) to inhibit conduction of vibrations between frames of the electric machine and the rotating apparatus.

3. An electromechanical system according to claim 2, wherein the flexible element (219, 220) is a ring-shaped metal bellow.

4. An electromechanical system according to any one of claims 1-3, wherein the coupling element (202) is a flexible coupling element to inhibit conduction of vibrations between the shafts of the electric machine and the rotating apparatus.

5. An electromechanical system according to claim 4, wherein the flexible coupling element (202) is a bellow coupling.

6. An electromechanical system according to any one of claims 1-5, wherein the electric machine (208) is a permanent magnet machine in which a rotor (211) comprises permanent magnets.

7. An electromechanical system according to any one of claims 1-6, wherein the electric machine (108) is an induction machine in which a rotor (111) comprises a cage winding.

## Patentansprüche

1. Elektromechanisches System, aufweisend:
- eine elektrische Maschine (108, 208),
- eine rotierende Vorrichtung (109, 209), die ein Turbokompressor ist, und
- ein Verbindungselement (101, 201), das dazu gestaltet ist, die elektrische Maschine mechanisch mit der rotierenden Vorrichtung zu verbinden,
wobei das Verbindungselement aufweist:
- ein Kupplungselement (102, 202), das eine Welle der elektrischen Maschine mit einer Welle der rotierenden Vorrichtung auf drehmomentübertragende Weise verbindet, und
- einen rohrförmigen Abschnitt (103, 203), der das Kupplungselement umgibt,
wobei:
- ein erster Rand des rohrförmigen Abschnitts eine Dichtung (104, 204) zum Anordnen einer ersten hermetischen Verbindung zwischen dem ersten Rand des rohrförmigen Abschnitts und einer Außenfläche der elektrischen Maschine aufweist,
- ein zweiter Rand des rohrförmigen Abschnitts eine Dichtung (105, 205) zum Anordnen einer zweiten hermetischen Verbindung zwischen dem zweiten Rand des rohrförmigen Abschnitts und einer Außenfläche der rotierenden Vorrichtung aufweist, und
- der röhrenförmige Abschnitt eine Öffnung (106, 206) und einen Deckel (107, 207) zum hermetischen Verschließen der Öffnung aufweist, wobei die Öffnung einen Zugang zu dem Kupplungselement von außerhalb des röhrenförmigen Abschnitts bereitstellt,
**dadurch gekennzeichnet, dass** das elektromechanische System eine Rohrleitung (110, 210) aufweist, die dazu gestaltet ist, einen Teil eines Eingangsstroms des Turbokompressors durch einen Luftspalt der elektrischen Maschine zu leiten.

2. Elektromechanisches System nach Anspruch 1, wobei der röhrenförmige Abschnitt mit mindestens einem ringförmigen flexiblen Element (219, 220) versehen ist, um die Übertragung von Schwingungen zwischen Rahmen der elektrischen Maschine und der rotierenden Vorrichtung zu verhindern.

3. Elektromechanisches System nach Anspruch 2, wobei das flexible Element (219, 220) ein ringförmiger Metallbalg ist.

4. Elektromechanisches System nach einem der Ansprüche 1 bis 3, wobei das Kupplungselement (202) ein flexibles Kupplungselement ist, um die Übertragung von Schwingungen zwischen den Wellen der elektrischen Maschine und der rotierenden Vorrichtung zu verhindern.

5. Elektromechanisches System nach Anspruch 4, wobei das flexible Kupplungselement (202) eine Balgkupplung ist.

6. Elektromechanisches System nach einem der Ansprüche 1 bis 5, wobei die elektrische Maschine (208) eine Permanentmagnetmaschine ist, bei der ein Rotor (211) Permanentmagnete aufweist.

7. Elektromechanisches System nach einem der Ansprüche 1 bis 6, wobei die elektrische Maschine (108) eine Induktionsmaschine ist, bei der ein Rotor (111) eine Käfigwicklung aufweist.

## Revendications

1. Système électromécanique comprenant :
- une machine électrique (108, 208),
- un appareil rotatif (109, 209) étant un turbo-compresseur, et
- un élément d'assemblage (101, 201) configuré pour connecter mécaniquement la machine électrique à l'appareil rotatif,
dans lequel l'élément d'assemblage comprend :
- un élément de couplage (102, 202) connectant un arbre de la machine électrique à un arbre de l'appareil rotatif de façon à transférer un couple, et
- une partie tubulaire (103, 203) entourant l'élément de couplage,
dans lequel :
- un premier bord de la partie tubulaire comprend un joint (104, 204) pour agencer un premier joint hermétique entre le premier bord de la partie tubulaire et une surface extérieure de la machine électrique,
- un second bord de la partie tubulaire comprend un joint (105, 205) pour agencer un second joint hermétique entre le second bord de la partie tubulaire et une surface extérieure de l'appareil rotatif, et
- la partie tubulaire comprend une ouverture (106, 206) et un couvercle (107, 207) pour fermer hermétiquement l'ouverture, l'ouverture fournissant un accès à l'élément de couplage de l'extérieur de la partie tubulaire,
**caractérisé en ce que** le système électromécanique comprend une tubulure (110, 210) configurée pour guider une partie d'un flux entrant du turbo-compresseur à s'écouler à travers un entrefer de la machine électrique.

2. Système électromécanique selon la revendication 1, dans lequel la partie tubulaire est dotée d'au moins un élément flexible annulaire (219, 220) pour empêcher la conduction de vibrations entre des châssis de la machine électrique et l'appareil rotatif.

3. Système électromécanique selon la revendication 2, dans lequel l'élément flexible (219, 220) est un soufflet métallique annulaire.

4. Système électromécanique selon l'une quelconque des revendications 1-3, dans lequel l'élément de couplage (202) est un élément de couplage flexible pour empêcher la conduction de vibrations entre les arbres de la machine électrique et l'appareil rotatif.

5. Système électromécanique selon la revendication 4, dans lequel l'élément de couplage flexible (202) est un couplage à soufflets.

6. Système électromécanique selon l'une quelconque des revendications 1-5, dans lequel la machine électrique (208) est une machine à aimant permanent dans laquelle un rotor (211) comprend des aimants permanents.

7. Système électromécanique selon l'une quelconque des revendications 1-6, dans lequel la machine électrique (108) est une machine à induction dans laquelle un rotor (111) comprend un enroulement à cage.
